# EUROPÄISCHE PATENTANMELDUNG

(11) **EP 3 263 862 A2**
(43) Veröffentlichungstag der Anmeldung: **03.01.2018**
(21) Anmeldenummer: 17169089.4
(22) Anmeldetag: 02.05.2017
(51) Int. Cl.: F01N 13/08, B60K 13/04

(54) **ABGASSCHALLDÄMPFER ZUM LÄNGSEINBAU IN EIN FAHRZEUG**

(30) Priorität: 09.05.2016 DE 102016108501
(71) Anmelder: Eberspächer Exhaust Technology GmbH & Co. KG, 66539 Neunkirchen (DE)
(72) Erfinder: SPIETH, Arnulf, 73269 Hochdorf (DE); MESGHENA, Daniel, 73760 Ostfildern (DE); MÜLLER, Joachim, 72555 Metzingen (DE); ROTHFUSS, Mathias, 71332 Waiblingen (DE); WEISS, Michael, 73655 Plüderhausen (DE); WIRTH, Georg, 73230 Kirchheim u. Teck (DE)
(74) Vertreter: RLTG

(57) **Zusammenfassung**

Ein Abgasschalldämpfer zum Längseinbau in ein Fahrzeug, umfassend ein in Richtung einer Gehäuselängsachse (G) langgestrecktes Schalldämpfergehäuse (28) mit einem Gehäusemantel (30) und zwei in Richtung der Gehäuselängsachse (G) in Abstand zueinander angeordneten und mit dem Gehäusemantel (30) einen Schalldämpferinnenraum umgrenzenden Stirnwandungen, wobei wenigstens ein Einlassrohr in den Schalldämpferinnenraum führt und wenigstens ein Auslassrohr aus dem Schalldämpferinnenraum führt, ist dadurch gekennzeichnet, dass am Gehäusemantel (30) wenigstens ein Soll-Verformungsbereich (64, 66) mit wenigstens einem zur Gehäuselängsachse (G) nicht parallelen Wandungsbereich (68, 70) vorgesehen ist.

## Beschreibung

Die vorliegende Erfindung betrifft einen Abgasschalldämpfer zum Längseinbau in ein Fahrzeug, umfassend ein in Richtung einer Gehäuselängsachse langgestrecktes Schalldämpfergehäuse mit einem Gehäusemantel und zwei in Richtung der Gehäuselängsachse in Abstand zueinander angeordneten und mit dem Gehäusemantel einen Schalldämpferinnenraum umgrenzenden Stirnwandungen, wobei wenigstens ein Einlassrohr in den Schalldämpferinnenraum führt und wenigstens ein Auslassrohr aus dem Schalldämpferinnenraum führt.

Aus der DE 10 2013 214 612 A1 ist ein mit einer Gehäuselängsachse in einer Fahrzeugquerrichtung orientiert einzubauender Schalldämpfer bekannt. Bei diesem sind im Schalldämpferinnenraum Zwischenwandungen angeordnet, welche von Rohrstücken durchsetzt sind und so eine akustische Verbindung und eine Abgasströmungsverbindung zwischen durch diese Zwischenwandungen voneinander getrennten Volumenbereichen des Schalldämpferinnenraums ermöglichen. Die Zwischenwandungen sind so gestaltet, dass bei einer in Fahrzeuglängsrichtung wirkenden Krafteinleitung in den Schalldämpfer, wie diese beispielsweise bei einem Heckaufprall eines anderen Fahrzeugs auftreten kann, der Schalldämpfer in Krafteinleitungsrichtung, also im Wesentlichen in Fahrzeuglängsrichtung, deformationsweich ist.

Es ist die Aufgabe der vorliegenden Erfindung, einen Abgasschalldämpfer zum Längseinbau in ein Fahrzeug vorzusehen, bei welchem eine zu einem Energieabbau beitragende Verformbarkeit des Abgasschalldämpfers insbesondere bei Krafteinleitung in einer Fahrzeuglängsrichtung gewährleistet ist.

Erfindungsgemäß wird diese Aufgabe gelöst durch einen Abgasschalldämpfer zum Längseinbau in ein Fahrzeug, umfassend ein in Richtung einer Gehäuselängsachse langgestrecktes Schalldämpfergehäuse mit einem Gehäusemantel und zwei in Richtung der Gehäuselängsachse in Abstand zueinander angeordneten und mit dem Gehäusemantel einen Schalldämpferinnenraum umgrenzenden Stirnwandungen, wobei wenigstens ein Einlassrohr in den Schalldämpferinnenraum führt und wenigstens ein Auslassrohr aus dem Schalldämpferinnenraum führt, wobei am Gehäusemantel wenigstens ein Soll-Verformungsbereich mit wenigstens einem zur Gehäuselängsachse nicht parallelen Wandungsbereich vorgesehen ist.

Durch eine derartige Ausgestaltung des Gehäusemantels ist dafür gesorgt, dass dieser im Fahrzeug im Wesentlichen in einer Fahrzeuglängsrichtung sich erstreckende Gehäusemantel bei starker Belastung in dieser Richtung flexibel und vergleichsweise leicht verformbar ist. Im Falle eines Aufpralls kann somit Energie durch Verformung des Schalldämpfers absorbiert werden und die Gefahr, dass der gesamte Schalldämpfer sich verschiebt und dabei andere Systembereiche beschädigt, kann gemindert werden.

Zur Energieabfuhr effizient wirksam kann dabei die Gehäusewandung realisiert werden, wenn der Wandungsbereich wölbungsartig, sickenartig, wellenartig oder balgenartig ausgebildet ist.

Aufgrund des Umstandes, dass Abgase in den Schalldämpfer über Einlass- bzw. aus dem Schalldämpfer über Auslassrohre geleitet werden und auch diese im Falle eines Aufpralls in die Kraftübertragung involviert sein können, ebenso wie ein im Inneren des Schalldämpfers angeordnetes Zwischenrohr, wird vorgeschlagen, dass wenigstens ein Einlassrohr oder/und wenigstens ein Auslassrohr oder/und wenigstens ein Zwischenrohr wenigstens einen Soll-Verformungsbereich aufweist, oder/ und dass wenigstens ein Einlassrohr oder/und wenigstens ein Auslassrohr oder/und wenigstens ein Zwischenrohr gekrümmt ist oder/und bezüglich einer Gehäuselängsachse angewinkelt angeordnet ist.

Dies kann beispielsweise dadurch realisiert werden, dass wenigstens ein Soll-Verformungsbereich einen wellenartig oder balgenartig ausgebildeten Längenbereich oder/und einen mit Schlitzen ausgebildeten Längenbereich oder/und einen mit einer Einbuchtung oder Ausbuchtung ausgebildeten Längenbereich oder/und einen mit einem abgeflachten Querschnittsprofil ausgebildeten Längenbereich oder/und einen bezüglich einer Gehäuselängsrichtung sich angewinkelt erstreckenden Längenbereich umfasst.

Eine zur Energieabfuhr herbeiführbare Verformung eines Rohres kann bei einer alternativen Ausgestaltungsart dadurch unterstützt werden, dass wenigstens ein Einlassrohr oder/und wenigstens ein Auslassrohr oder/und wenigstens ein Zwischenrohr wenigstens zwei bezüglich einander verschiebbare Rohrabschnitte umfasst.

Da im Allgemeinen der Innenraum eines Schalldämpfers durch eine oder mehrere Zwischenwandungen in eine Mehrzahl von Kammern unterteilt ist und derartige Zwischenwandungen grundsätzlich zu einer Versteifung des Schalldämpfergehäuses führen, wird zum Einführen einer besseren Verformbarkeit im Falle eines Aufpralls vorgeschlagen, dass wenigstens ein Einlassrohr oder/und wenigstens ein Auslassrohr oder/und wenigstens ein Zwischenrohr wenigstens eine im Schalldämpferinnenraum vorgesehene Zwischenwandung im Bereich einer Rohrdurchgangsöffnung durchsetzt, und dass ausgehend von wenigstens einer Rohrdurchgangsöffnung wenigstens ein vorzugsweise schlitzartiger Schwächungsbereich in einer Zwischenwandung vorgesehen ist, wobei beispielsweise durch wenigstens zwei Schwächungsbereiche eine Verformungslasche bereitgestellt sein kann.

Eine weiter verbesserte Verformbarkeit im Falle eines Aufpralls kann gemäß einem weiteren Aspekt der Erfindung dadurch erreicht werden, dass wenigstens ein Einlassrohr oder/und wenigstens ein Auslassrohr oder/und wenigstens ein Zwischenrohr wenigstens in einem im Wesentlichen quer zur Gehäuselängsachse sich erstreckenden Längenabschnitt mit einem in einer Abflachungsrichtung abgeflachten Querschnittsprofil ausgebildet ist.

Da im Falle eines Aufpralls auf den Heckbereich eines Fahrzeugs die auch im Abgasschalldämpfer aufzunehmenden Kräfte im Allgemeinen in einer Fahrzeuglängsrichtung wirken, wird weiter vorgeschlagen, dass eine Abflachungsrichtung im Wesentlichen einer Erstreckungsrichtung der Gehäuselängsachse entspricht, oder/und dass das abgeflachte Querschnittsprofil ein rundes Querschnittsprofil, vorzugsweise oval oder elliptisch, ist.

Um auch im Anbindungsbereich des Abgasschalldämpfers an eine Trägerstruktur eines Fahrzeugs bei Krafteinleitung eine vergleichsweise leichte Verformung und somit Energieabfuhr erreichen zu können, wird vorgeschlagen, dass das Schalldämpfergehäuse vermittels wenigstens eines bezüglich der Gehäuselängsachse angewinkelten Abstützorgans bezüglich einer Trägerstruktur abgestützt oder abstützbar ist. Dabei erstreckt sich vorzugsweise wenigstens ein Abstützorgan ausgehend von einem axialen Endbereich des Schalldämpfergehäuses.

Eine bei Einleitung einer Deformationskraft verstärkte Verformung insbesondere von Komponenten im Inneren des Schalldämpfergehäuses kann dadurch unterstützt werden, dass wenigstens ein Auslassrohr im Bereich eines ersten axialen Endbereichs des Schalldämpfergehäuses, vorzugsweise durch die im Bereich des ersten axialen Endbereichs des Schalldämpfergehäuses vorgesehene Stirnwandung hindurch, aus dem Schalldämpferinnenraum herausgeführt ist, und dass die im Bereich eines zweiten axialen Endbereichs des Schalldämpfergehäuses vorgesehene Stirnwandung wenigstens bereichsweise in Richtung zum Schalldämpferinnenraum gewölbt ist. Durch das Ausformen bzw. Auswölben dieser Stirnwandung wird das Schalldämpfergehäuse in diesem zweiten axialen Endbereich grundsätzlich versteift, sodass bei Krafteinleitung auf diese Stirnwandung auftretende Komponenten im Inneren des Schalldämpfergehäuses an einer axialen Bewegung verstärkt gehindert werden und somit leichter verformt werden.

Die Erfindung betrifft ferner ein Kraftfahrzeug, umfassend wenigstens einen erfindungsgemäß aufgebauten Abgasschalldämpfer, wobei der Abgasschalldämpfer vorzugsweise in einem Heckbereich des Kraftfahrzeugs mit im Wesentlichen in einer Fahrzeuglängsrichtung orientierter Gehäuselängsachse des Schalldämpfergehäuses angeordnet ist.

Die vorliegende Erfindung wird nachfolgend mit Bezug auf die beiliegenden Figuren detailliert beschrieben. Es zeigt:
- Fig. 1: eine Prinzipdarstellung eines mit einem längs eingebauten Abgasschalldämpfer ausgestatteten Fahrzeugs;
- Fig. 2: eine Prinzipdarstellung eines Abgasschalldämpfers;
- Fig. 3: ein gekrümmtes Abgasrohr eines Abgasschalldämpfers;
- Fig. 4: ein Abgasrohr eines Abgasschalldämpfers mit einem in Form einer seitlichen Ausbauchung ausgebildeten Soll-Verformungsbereich,
- Fig. 5: einen Abgasschalldämpfer mit einem bezüglich einer Gehäuselängsachse angewinkelten Einlassrohr;
- Fig. 6: ein Abgasrohr eines Abgasschalldämpfer mit zwei teleskopartig bezüglich einander verschiebbaren Rohrabschnitten;
- Fig. 7: einen Abgasschalldämpfer mit einem Gehäusemantel mit zwei Soll-Verformungsbereichen unterschiedlicher Gestalt;
- Fig. 8: eine der Fig. 2 entsprechende Prinzipdarstellung eines Abgasschalldämpfers mit alternativer Ausgestaltung;
- Fig. 9: einen Querschnitt eines Abgasrohres des Abgases Schalldämpfers der Fig. 8;
- Fig. 10: eine prinzipartige Darstellung eines bezüglich einer Trägerstruktur eines Fahrzeugs abgestützten Abgasschalldämpfers;
- Fig. 11: einen in einem Abgasschalldämpfer vorgesehene Zwischenwandung mit zwei Rohrdurchgangsöffnungen und diesem zugeordneten Schwächungsbereichen.

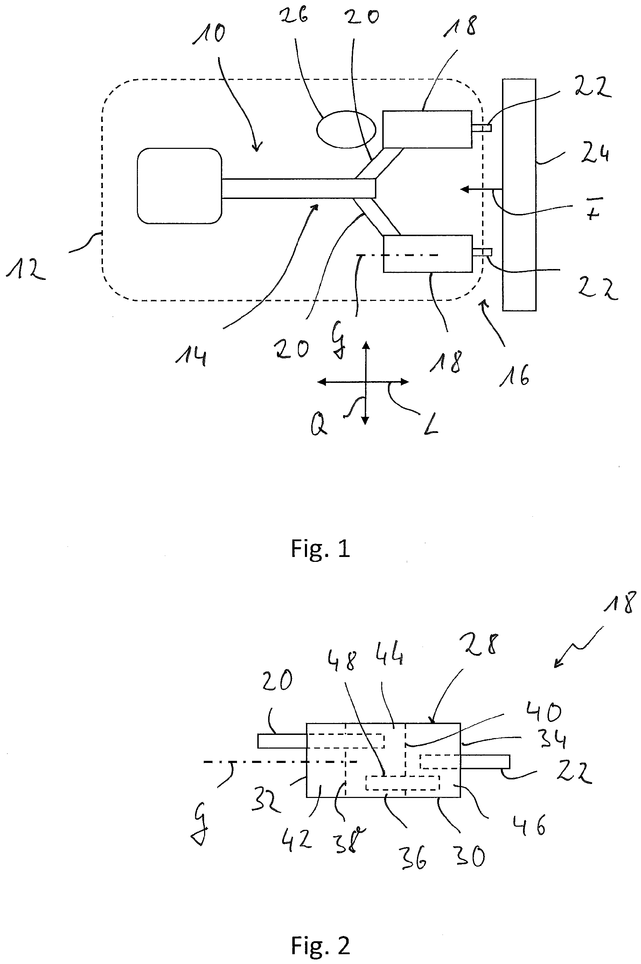

In Fig. 1 ist ein mit einem Abgasführungssystem 10 ausgestattetes Fahrzeug allgemein mit 12 bezeichnet. Das Abgasführungssystem 10 umfasst einen beispielsweise an einem Fahrzeugchassis oder Rahmen getragenen, in einer Fahrzeuglängsrichtung L sich erstreckenden Abgasführungsstrang 14 und zwei in einem Heckbereich 16 des Fahrzeugs 12 mit in einer Gehäuselängsachse G sich im Wesentlichen in der Fahrzeugquerrichtung L erstreckend mit gegenseitigem Abstand in einer Fahrzeugquerrichtung Q eingebaute, z. B. im Wesentlichen baugleiche bzw. symmetrisch aufgebaute Abgasschalldämpfer 18. Die über jeweilige Einlassrohre 20 in die Abgasschalldämpfer 18 eintretenden und durch die Abgasschalldämpfer 18 hindurchströmenden Abgase verlassen das Abgasführungssystem 10 durch allgemein auch als Endrohre bezeichnete Auslassrohre 22 der Abgasschalldämpfer 18.

Bei einem Heckaufprall eines Hindernisses 24, beispielsweise eines anderen Fahrzeugs, wird im Allgemeinen eine Kraft F in das Fahrzeug 12 bzw. den Heckbereich 16 desselben eingeleitet, die eine wesentliche Erstreckungskomponente parallel zur Fahrzeuglängsrichtung L aufweisen wird. Durch eine derartige in den Heckbereich 16 eingeleitete Kraft F besteht die Gefahr, dass das Abgasführungssystem 10, insbesondere die im Heckbereich 16 positionierten Abgasschalldämpfer 18, im Fahrzeug 12 verschoben werden und mit anderen Systembereichen des Fahrzeugs 12 , beispielsweise einem Tank 26, kollidieren. Um dies zu vermeiden, werden nachfolgend Ausgestaltungsaspekte beschrieben, welche im Bereich der Abgasschalldämpfer 18 für eine leichtere Verformbarkeit derselben sorgen, so dass bei Einleitung einer Kraft F insbesondere im Wesentlichen in Richtung der Fahrzeuglängsrichtung L Energie in den Abgasschalldämpfern 18 absorbiert wird und die Gefahr, dass diese in übermäßigem Ausmaß im Fahrzeug 12 verschoben werden, gemindert ist.

In Fig. 2 ist ein derartiger Abgasschalldämpfer 18 in prinzipartiger Draufsichtdarstellung gezeigt. Der Abgasschalldämpfer 18 umfasst ein Schalldämpfergehäuse 28 mit einem beispielsweise im Wesentlichen zylindrisch gestalteten, in Richtung der Gehäuselängsachse G langgestreckten Gehäusemantel 30. An seinen beiden in Richtung der Gehäuselängsachse G gelegenen Endbereichen ist der Gehäusemantel 30 mit jeweiligen Stirnwandungen 32 bzw. 34 beispielsweise durch materialschlüssige Verbindung fest verbunden. Der Gehäusemantel 30 umschließt zusammen mit den beiden Stirnwandungen 32, 34 einen Schalldämpferinnenraum 36.

Ein Einlassrohr 20 führt beispielsweise durch die Stirnwandung 32 hindurch in den Schalldämpferinnenraum 36. Ein Auslassrohr 22 führt durch die Stirnwandung 34 hindurch aus dem Schalldämpferinnenraum 36 heraus. Der Schalldämpferinnenraum 36 kann durch eine bzw. mehrere Zwischenwandungen 38, 40 in mehrere Kammern 42, 44, 46 unterteilt sein. Im dargestellten Beispiel durchsetzt das Einlassrohr 20 die der Stirnwandung 32 näher liegende Zwischenwandung 38 und ist somit zu einer mittleren der drei in Richtung der Gehäuselängsachse LG aufeinanderfolgenden Kammern 42, 44, 46 offen. Ein Zwischenrohr 48 durchsetzt die Zwischenwandung 40 und verbindet somit die mittlere Kammer 44 mit der Kammer 46, zu welcher auch das Auslassrohr 22 offen ist.

Es ist darauf hinzuweisen, dass in Fig. 2 ein Abgasschalldämpfer mit seinen wesentlichen Systembereichen bzw. Komponenten in prinzipartiger Weise dargestellt ist. Ein derartiger Abgasschalldämpfer kann sich hinsichtlich der Anordnung dieser Systembereiche bzw. Komponenten zueinander, der Anzahl derselben und auch der Formgebung derselben selbstverständlich vom dargestellten Beispiel unterscheiden.

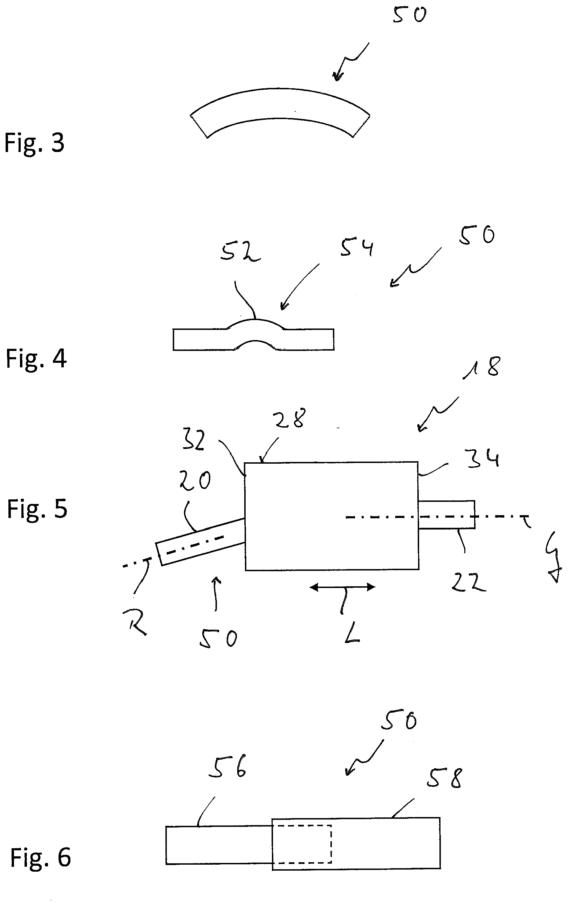

In Fig. 3 ist ein allgemein mit 50 bezeichnetes Abgasrohr dargestellt, welches beispielsweise in dem in Fig. 2 dargestellten Abgasschalldämpfer 18 als Einlassrohr 20, als Auslassrohr 22 oder als Zwischenrohr 48 eingesetzt werden kann. Das grundsätzlich langgestreckte Abgasrohr 50 ist vorzugsweise in seinem gesamten Erstreckungsbereich gekrümmt. Das Abgasrohr 50 wird in den Abgasschalldämpfer 18 so integriert, dass es grundsätzlich eine in Richtung der Gehäuselängsachse G desselben ausgerichtete Orientierung einnimmt. Bei Auftreten einer Belastung in Richtung der Gehäuselängsachse G, beispielsweise mit der in Fig. 1 dargestellten Kraft F, kann das Abgasrohr 50 sich verformen und dabei zur Energieabfuhr beitragen.

In Fig. 4 ist eine Ausgestaltung eines Abgasrohrs 50 gezeigt, welches nur in einem Längenbereich 52 mit einer gekrümmten Konfiguration ausgebildet ist. Mit diesem Längenbereich 52 ist im ansonsten im Wesentlichen geradlinig sich erstreckenden Abgasrohr 50 ein Soll-Verformungsbereich 54 bereitgestellt, in welchem das Abgasrohr 50 bei Auftreten einer axialen Belastung sich definiert verformen kann.

Es ist hier darauf hinzuweisen, dass dieser Soll-Verformungsbereich 54 auch in anderer Form, beispielsweise durch eine wellenartige oder balgenartige Ausgestaltung des Längenbereichs 52, durch das Bereitstellen mit Schlitzen, vorzugsweise in Richtung der Längserstreckung des Abgasrohrs 50 orientiert, durch eine seitliche Ausbuchtung oder Einbuchtung oder durch ein allgemein abgeflachtes Querschnittsprofil bereitgestellt sein kann. Auch können verschiedene derartige zum Einführen eines Soll-Verformungsbereichs 54 beitragende Konfigurationen miteinander kombiniert an einem Abgasrohr 50 vorgesehen sein. Die im Soll-Verformungsbereich 54 bereitgestellte Formgebung des Abgasrohrs 50 kann dabei bezüglich der Längsachse desselben symmetrisch sein, kann aber, wie in Fig. 4 dargestellt, auch unsymmetrisch bzw. nur an Umfangsbereichen, beispielsweise in Form einer Delle oder einer Ausbauchung, vorgesehen sein.

Die Fig. 5 zeigt eine Ausgestaltung, bei welcher ein als Einlassrohr 20 genutztes Abgasrohr 50 im Abgasschalldämpfer 18 derart orientiert ist, dass eine Rohrlängsachse R bezüglich der Gehäuselängsachse G angewinkelt ist, also dazu nicht parallel orientiert ist. Insbesondere dann, wenn ein derart angewinkelt bezüglich der Gehäuselängsachse G orientiertes Abgasrohr 50 im Bereich einer der Stirnwandungen 32, 34 durch das Schalldämpfergehäuse 28 hindurchgeführt ist bzw. in den Schalldämpferinnenraum 36 geführt ist, ist der Winkel der Anwinkelung des Abgasrohrs 50 bezüglich der Gehäuselängsachse G vorzugsweise kleiner als 90°, am meisten bevorzugt kleiner als 45°.

Die Fig. 6 zeigt ein Abgasrohr 50, welches in dieser Bauart sowohl als Einlassrohr 20, als auch als Auslassrohr 22, als auch als Zwischenrohr 48 eingesetzt werden kann. Das Abgasrohr 50 umfasst zwei teleskopartig ineinander eingesetzte Rohrabschnitte 56, 58. Die beiden Rohrabschnitte 56, 58 können durch leichte materialschlüssige Heftung oder durch Verpressung miteinander verbunden werden, so dass bei Einleiten einer in Längsrichtung des Abgasrohres 50 wirkenden Kraft dann, wenn diese Kraft ein vorbestimmtes Niveau übersteigt, die beiden Rohrabschnitte 56, 58 sich bezüglich einander verschieben, insbesondere ineinander einschieben können und somit eine vergleichsweise leichte Verformung des ein derartiges Abgasrohr 50 enthaltenden Abgasschalldämpfers 18 zulassen.

Grundsätzlich ist darauf hinzuweisen, dass zur Unterstützung der Verformbarkeit des Abgasschalldämpfers 18 die in diesem eingesetzten Abgasrohre vorzugsweise eine begrenzte Länge aufweisen, also sich im Wesentlichen nicht vollständig durch den Abgasschalldämpfer hindurch erstrecken, wodurch eine übermäßige Versteifung des Abgasschalldämpfers durch zu lange Abgasrohre vermieden wird.

Zu den vorangehend beschriebenen Ausgestaltungsvarianten von Abgasrohren 50 ist weiter auszuführen, dass diese im Allgemeinen, ebenso wie das Schalldämpfergehäuse 28, aus Metallmaterial, insbesondere Blechmaterial, aufgebaut sind, was einerseits der gegenseitigen Verbindung insbesondere durch Verschweißung zulässt, andererseits eine definierte Verformung derselben bei Auftreten von entsprechenden Belastungen zulässt.

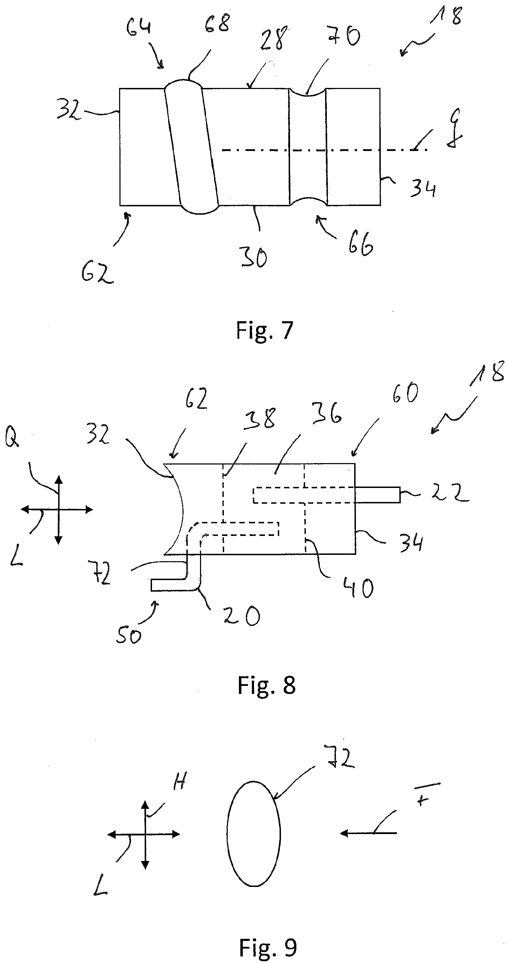

Die Fig. 7 zeigt eine weitere Ausgestaltungsform eines Abgasschalldämpfers 18 bzw. eines Schalldämpfergehäuses 28 dafür. Der an seinen beiden axialen Endbereichen 60, 62 mit den Stirnwandungen 32, 34 beispielsweise durch Verschweißung verbundene Gehäusemantel 30 weist an zwei in Richtung der Gehäuselängsachse G in Abstand zueinander liegenden Bereichen jeweils einen Soll-Verformungsbereich 64 bzw. 66 auf. Der Soll-Verformungsbereich 64 ist durch eine beispielsweise in Umfangsrichtung um die Gehäuselängsachse G durchlaufend ausgebildete, wölbungsartige Ausformung bzw. Ausbauchung 68 des Gehäusemantels 30 bereitgestellt, welcher beispielsweise bezüglich der Gehäuselängsachse G angewinkelt über den Umfang des Gehäusemantels 30 sich erstrecken kann. Der Soll-Verformungsbereich 66 ist durch eine beispielsweise ebenfalls über den gesamten Umfang des Gehäusemantels 30 umlaufend ausgebildete wölbungsartige Einformung 70 bereitgestellt, die beispielsweise bezüglich der Gehäuselängsachse G im Wesentlichen orthogonal orientiert ist.

Durch derartige den Gehäusemantel 30 grundsätzlich schwächende Soll-Verformungsbereiche 64, 66 wird die Möglichkeit geschaffen, bei Auftreten einer in Richtung der Gehäuselängsachse G wirkenden Kraft F, im Soll-Verformungsbereichen 64, 66 eine vergleichsweise leichte Verformbarkeit des Gehäusemantels 30 bzw. des Schalldämpfergehäuses 28 zu ermöglichen, um dadurch Energie abzuführen bzw. eine übermäßige axiale Verschiebung des gesamten Abgasschalldämpfers zu verhindern.

Es ist darauf hinzuweisen, dass selbstverständlich am Gehäusemantel 30 nur ein derartiger Soll-Verformungsbereich 64 bzw. 66 vorgesehen sein kann bzw. auch mehrere Soll-Verformungsbereiche 64 oder 66 gleicher Art realisiert sein können. Durch einen derartigen Soll-Verformungsbereich 64, 66 wird der Gehäusemantel 28 lokal mit einem zur Gehäuselängsachse G nicht parallelen, nämlich im dargestellten Beispiel wölbungsartig verformten Wandungsbereich bereitgestellt ist, so dass die leichte Verformbarkeit des Gehäusemantels 28 unterstützt wird. Ein derartiger Soll-Verformungsbereich kann grundsätzlich auch in anderer Weise, beispielsweise durch sickenartige, wellenartige oder balgenartige Ausgestaltung des Gehäusemantels in einem jeweiligen Soll-Verformungsbereich bereitgestellt werden. Auch kann ein derartiger über den gesamten oder wesentliche Teile des Umfangsbereichs des Gehäusemantels 30 sich erstreckender Soll-Verformungsbereich sich über diejenigen Bereiche hinweg erstrecken, in welchen Gehäuseschalen des Gehäusemantels 30 in einem Falzbereich miteinander verbunden sind oder ein durch Wickeln eines Blechbandes gebildeter Gehäusemantel 30 einen windungsartig umlaufenden Verbindungsbereich aufweist.

Eine weitere zur leichteren Verformbarkeit eines Abgasschalldämpfers 18 beitragende Konfiguration ist in den Fig. 8 und 9 gezeigt. Man erkennt in Fig. 8, dass das ein Einlassrohr 20 bereitstellende Abgasrohr 50 zweifach beispielsweise im Wesentlichen rechtwinklig abgekröpft ist, so dass es nicht in Richtung der Gehäuselängsachse durch eine der Stirnwandungen hindurch in den Schalldämpferinnenraum 36 geführt ist, sondern durch den Gehäusemantel 30 hindurch. Insbesondere durchsetzt ein bezüglich der Gehäuselängsachse bzw. auch der Fahrzeuglängsrichtung L im Wesentlichen orthogonal und damit im Wesentlichen in der Fahrzeugquerrichtung Q sich erstreckender Längenabschnitt 72 des Abgasrohrs 50 den Gehäusemantel 30.

Das Abgasrohr 50 des in Fig. 8 dargestellten Abgasschalldämpfers 18 ist zumindest in seinem Längenabschnitt 32 mit einem in Fig. 9 dargestellten abgeflachten Querschnittsprofil ausgebildet. Die Abflachungsrichtung entspricht dabei im Wesentlichen der Fahrzeuglängsrichtung L und somit auch im Wesentlichen der Richtung, in welcher die Gehäuselängsachse des Abgasschalldämpfers 18 sich erstreckt, damit auch im Wesentlichen einer Richtung, in welcher eine Kraft F im Falle eines Heckaufpralls auf diesen Rohrabschnitt 72, beispielsweise übertragen durch den Gehäusemantel 30, einwirkt. Aufgrund des abgeflachten Querschnittes ist bei Einwirkung der Kraft F das Abgasrohr 50 im Längenabschnitt 72 vergleichsweise leicht verformbar und kann somit einen wesentlichen Beitrag zur Energieabfuhr leisten.

Die Fig. 8 zeigt ferner, dass insbesondere die im axialen Endbereich 62 des Abgasschalldämpfers 18 vorgesehene Stirnwandung 32, also diejenige Stirnwandung, die bei in ein Fahrzeug 12 integriertem Abgasschalldämpfer 18 in Richtung vom Heckbereich 16 weg orientiert ist, zum Schalldämpferinnenraum 36 hin zumindest bereichsweise ausgewölbt bzw. bombiert geformt ist. Dies führt zu einer vergleichsweise steifen Konfiguration des Schalldämpfergehäuses 28 im Bereich dieser Stirnwandung 20. Bei Belastung in Richtung der Kraft F bildet somit die vergleichsweise steife Stirnwandung 32 ein Widerlager für im Schalldämpferinnenraum 36 sich in der Fahrzeuglängsrichtung L verschiebende Komponenten, beispielsweise das Auslassrohr 22. Stoßen derartige Komponenten im Verlaufe ihrer Verschiebung auf die vergleichsweise steife Stirnwandung 32, so werden sie zunächst an einer weiteren axialen Verschiebung gehindert, so dass dann weitere bauliche Maßnahmen, die zu einer Verformung dieser Komponenten beitragen können, wie z. B. ein in Fig. 4 dargestellter Soll-Verformungsbereich 54, effizienter genutzt werden, um eine Verformung einer derartigen Komponente des Abgasschalldämpfers herbeizuführen.

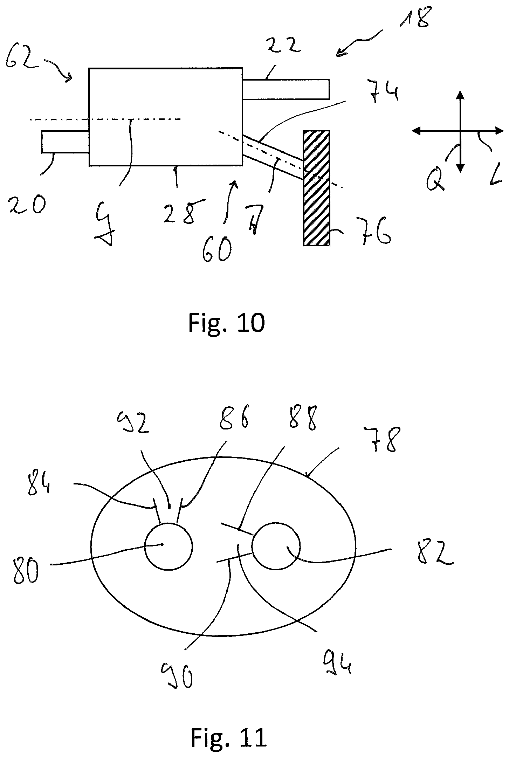

Die Fig. 10 zeigt einen Abgasschalldämpfer 18, der in seinem dem Heckbereich zugewandten axialen Endbereich 60 über ein Abstützorgan 74 bezüglich einer Trägerstruktur 76, beispielsweise einem Fahrzeugchassis oder dergleichen, getragen bzw. abgestützt ist. Das grundsätzlich langgestreckt ausgebildete Abstützorgan 74 ist so orientiert, dass dessen Abstützorgan-Längsachse A bezüglich der Gehäuselängsachse G des Abgasschalldämpfers 18 angewinkelt ist. Wird beispielsweise über die Trägerstruktur 76 die vorangehend bereits erläuterte Kraft F in Richtung der Fahrzeuglängsrichtung L eingeleitet, so kann aufgrund seiner Anwinkelung auch zur Richtung der Kraft F das Abstützorgan 74 bezüglich des Schalldämpfergehäuses 28 verformt bzw. verkippt werden, so dass auch in diesem Bereich der Abstützung eine durch Verformung hervorgerufene Energieabfuhr auftreten kann.

Selbstverständlich könnte ein derartig bezüglich der Gehäuselängsachse G angewinkeltes Abstützorgan 74 auch oder alternativ im axialen Endbereich 62 des Schalldämpfergehäuses 28 vorgesehen sein. Dabei kann ein derartiges Abstützorgan 74 beispielsweise an den Gehäusemantel 30 oder/und die jeweilige Stirnwandung 32, 34 angebunden sein. Insbesondere bei Anbindung an die beispielsweise im Wesentlichen planar ausgebildete Stirnwandung 32 führt eine axiale Belastung, übertragen durch das Abstützorgan 74, zu einer Verformung der Stirnwandung 32 und somit einem weiteren Beitrag zur Energieabfuhr.

Die Fig. 11 zeigt eine im Schalldämpferinnenraum 36 anzuordnende Zwischenwandung 78. Anders als die in Fig. 2 dargestellten Zwischenwandungen 38, 40, durch welche jeweils nur ein einziges Abgasrohr hindurchgeführt ist, weist die Zwischenwandung 78 zwei Rohrdurchgangsöffnungen 80, 82 auf, deren Umfangskontur an die Umfangskontur der durch diese hindurch zu führenden Abgasrohre angepasst ist. Dabei kann beispielsweise eines der Abgasrohre ein Einlassrohr 20 oder ein Auslassrohr 22 sein, während das andere beispielsweise ein Zwischenrohr 48 sein kann. Man erkennt, dass in Zuordnung zu den beiden Rohrdurchgangsöffnungen 80, 82 jeweils zwei beispielsweise in Form von schlitzartigen Einschnitten bereitgestellte Schwächungsbereiche 84, 86 bzw. 88, 90 vorgesehen sind, zwischen welchen jeweils eine Verformungslasche 92 bzw. 94 gebildet ist. Bei Auftreten einer axialen Belastung, welche über ein jeweiliges die Zwischenwand 78 durchsetzendes Abgasrohr auf die Zwischenwandung 78 übertragen werden kann, kann durch Bereitstellen einer derartigen Verformungslasche 92 bzw. 94 vergleichsweise leicht eine lokale axiale Verformung der Zwischenwandung 78 entstehen.

Es ist darauf hinzuweisen, dass in Zuordnung zu einer bzw. mehreren derartigen Rohrdurchgangsöffnungen 80, 82 auch mehrere derartige Schwächungsbereiche 84, 86 bzw. 88, 90 und somit auch mehrere derartige Verformungslaschen 92, 94 vorgesehen sein können, beispielsweise an einander jeweils diametral gegenüberliegenden Umfangsbereichen. Auch kann eine derartige Konfiguration bei einer Zwischenwandung vorgesehen sein, welche nur eine Rohrdurchgangsöffnung bzw. mehr als zwei Rohrdurchgangsöffnungen aufweist. Die von einer jeweiligen Rohrdurchgangsöffnung ausgehenden Schwächungsbereiche können bis zur jeweiligen Rohrdurchgangsöffnung offen sein, können jedoch auch beispielsweise mit in geringem Abstand vom Außenumfangsbereich einer Durchgangsöffnung ausgehend sich im Wesentlichen radial von dieser weg erstrecken. Die Schwächungsbereiche können, wie bereits ausgeführt, durch in die Zwischenwandung 78 eingebrachte Schnitte bzw. Schlitze erzeugt sein, können aber auch durch Einprägungen oder sonstige Materialschwächungen bereitgestellt sein.

Abschließend ist darauf hinzuweisen, dass vorangehend verschiedene Maßnahmen beschrieben wurden, welche bei Auftreten einer im Wesentlichen in Richtung einer Fahrzeuglängsrichtung orientierten Krafteinwirkung im Heckbereich eines Fahrzeugs bei einem längs eingebauten Abgasschalldämpfer die leichte Verformbarkeit desselben und somit eine effiziente Energieabfuhr unterstützen. Jeder der vorangehend für sich alleine beschriebenen Ausgestaltungsaspekte ist dabei besonders vorteilhaft. Selbstverständlich können verschiedene dieser Aspekte beliebig miteinander kombiniert werden.

## Patentansprüche

1. Abgasschalldämpfer zum Längseinbau in ein Fahrzeug, umfassend ein in Richtung einer Gehäuselängsachse (G) langgestrecktes Schalldämpfergehäuse (28) mit einem Gehäusemantel (30) und zwei in Richtung der Gehäuselängsachse (G) in Abstand zueinander angeordneten und mit dem Gehäusemantel (30) einen Schalldämpferinnenraum (36) umgrenzenden Stirnwandungen (32, 34), wobei wenigstens ein Einlassrohr (20) in den Schalldämpferinnenraum (36) führt und wenigstens ein Auslassrohr (22) aus dem Schalldämpferinnenraum (36) führt, **dadurch gekennzeichnet, dass** am Gehäusemantel (30) wenigstens ein Soll-Verformungsbereich (64, 66) mit wenigstens einem zur Gehäuselängsachse (G) nicht parallelen Wandungsbereich (68, 70) vorgesehen ist.

2. Abgasschalldämpfer nach Anspruch 1, **dadurch gekennzeichnet, dass** der Wandungsbereich (68, 70) wölbungsartig, sickenartig, wellenartig oder balgenartig ausgebildet ist.

3. Abgasschalldämpfer nach Anspruch 1 oder 2 oder dem Oberbegriff des Anspruchs 1, **dadurch gekennzeichnet, dass** wenigstens ein Einlassrohr (20) oder/und wenigstens ein Auslassrohr (22) oder/und wenigstens ein Zwischenrohr (48) wenigstens einen Soll-Verformungsbereich (54) aufweist, oder/und dass wenigstens ein Einlassrohr (20) oder/und wenigstens ein Auslassrohr (22) oder/und wenigstens ein Zwischenrohr (48) gekrümmt ist oder/und bezüglich einer Gehäuselängsachse (G) angewinkelt angeordnet ist.

4. Abgasschalldämpfer nach Anspruch 3, **dadurch gekennzeichnet, dass** wenigstens ein Soll-Verformungsbereich (54) einen wellenartig oder balgenartig ausgebildeten Längenbereich oder/und einen mit Schlitzen ausgebildeten Längenbereich (52) oder/und einen mit einer Einbuchtung oder Ausbuchtung ausgebildeten Längenbereich oder/und einen mit einem abgeflachten Querschnittsprofil ausgebildeten Längenbereich oder/und einen bezüglich einer Gehäuselängsrichtung (G) sich angewinkelt erstreckenden Längenbereich (52) umfasst.

5. Abgasschalldämpfer nach einem der Ansprüche 1- 4 oder dem Oberbegriff des Anspruchs 1, **dadurch gekennzeichnet, dass** wenigstens ein Einlassrohr (20) oder/und wenigstens ein Auslassrohr (22) oder/und wenigstens ein Zwischenrohr (48) wenigstens zwei bezüglich einander verschiebbare Rohrabschnitte (54, 56) umfasst.

6. Abgasschalldämpfer nach einem der Ansprüche 1-5 oder dem Oberbegriff des Anspruchs 1, **dadurch gekennzeichnet, dass** wenigstens ein Einlassrohr (20) oder/und wenigstens ein Auslassrohr (22) oder/und wenigstens ein Zwischenrohr (48) wenigstens eine im Schalldämpferinnenraum (36) vorgesehene Zwischenwandung (38, 40, 78) im Bereich einer Rohrdurchgangsöffnung (80, 82) durchsetzt, und dass ausgehend von wenigstens einer Rohrdurchgangsöffnung (80, 82) wenigstens ein vorzugsweise schlitzartiger Schwächungsbereich (84, 86, 88, 90) in einer Zwischenwandung (78) vorgesehen ist.

7. Abgasschalldämpfer nach Anspruch 6, **dadurch gekennzeichnet, dass** durch wenigstens zwei Schwächungsbereiche (84, 86, 88, 90) eine Verformungslasche (92, 94) bereitgestellt ist.

8. Abgasschalldämpfer nach einem der Ansprüche 1-7 oder dem Oberbegriff des Anspruchs 1, **dadurch gekennzeichnet, dass** wenigstens ein Einlassrohr (20) oder/und wenigstens ein Auslassrohr (22) oder/und wenigstens ein Zwischenrohr (48) wenigstens in einem im Wesentlichen quer zur Gehäuselängsachse (G) sich erstreckenden Längenabschnitt (72) mit einem in einer Abflachungsrichtung abgeflachten Querschnittsprofil ausgebildet ist.

9. Abgasschalldämpfer nach Anspruch 8, **dadurch gekennzeichnet, dass** das abgeflachte Querschnittsprofil ein rundes Querschnittsprofil, vorzugsweise oval oder elliptisch, ist, oder/und dass eine Abflachungsrichtung im Wesentlichen einer Erstreckungsrichtung der Gehäuselängsachse (G) entspricht.

10. Abgasschalldämpfer nach einem der Ansprüche 1-9 oder dem Oberbegriff des Anspruchs 1, **dadurch gekennzeichnet, dass** das Schalldämpfergehäuse (28) vermittels wenigstens eines bezüglich der Gehäuselängsachse (G) angewinkelten Abstützorgans (74) bezüglich einer Trägerstruktur (76) abgestützt oder abstützbar ist.

11. Abgasschalldämpfer nach Anspruch 10, **dadurch gekennzeichnet, dass** wenigstens ein Abstützorgan (74) sich ausgehend von einem axialen Endbereich (60) des Schalldämpfergehäuses (28) erstreckt.

12. Abgasschalldämpfer nach einem der Ansprüche 1-11 oder dem Oberbegriff des Anspruchs 1, **dadurch gekennzeichnet, dass** wenigstens ein Auslassrohr (22) im Bereich eines ersten axialen Endbereichs (60) des Schalldämpfergehäuses (28), vorzugsweise durch die im Bereich des ersten axialen Endbereichs (60) des Schalldämpfergehäuses (28) vorgesehene Stirnwandung (24) hindurch, aus dem Schalldämpferinnenraum (36) herausgeführt ist, und dass die im Bereich eines zweiten axialen Endbereichs (62) des Schalldämpfergehäuses (28) vorgesehene Stirnwandung (32) wenigstens bereichsweise in Richtung zum Schalldämpferinnenraum (36) gewölbt ist.

13. Kraftfahrzeug, umfassend wenigstens einen Abgasschalldämpfer nach einem der vorangehenden Ansprüche, wobei der Abgasschalldämpfer (18) vorzugsweise in einem Heckbereich (16) des Kraftfahrzeugs (12) mit im Wesentlichen in einer Fahrzeuglängsrichtung (L) orientierter Gehäuselängsachse (G) des Schalldämpfergehäuses (28) angeordnet ist.
